# EUROPEAN PATENT SPECIFICATION

(11) **EP 0 506 071 B1**
(45) Date of publication and mention of the grant of the patent: **16.08.1995**
(21) Application number: 92105290.8
(22) Date of filing: 27.03.1992
(51) Int. Cl.: G02B 15/14, G06K 7/10

(54) **Lens system for optical reader**
Linsensystem für optisches Lesegerät
Système de lentilles pour lecteur optique

(30) Priority: 27.03.1991 JP 85896/91; 13.05.1991 JP 135308/91
(43) Date of publication of application: 30.09.1992
(73) Proprietor: NEC CORPORATION, Tokyo (JP)
(72) Inventor: Ono, Yuzo, Minato-ku, Tokyo (JP); Miyazaki, Hiroyuki, Minato-ku, Tokyo (JP)
(74) Representative: VOSSIUS & PARTNER

(56) References cited:
- EP-A- 0 276 589
- EP-A- 0 297 361
- PATENT ABSTRACTS OF JAPAN, vol. 10, no. 177 (P-470), 21 June 1986 ; & JP-A-61 025 120
- PATENT ABSTRACTS OF JAPAN, vol. 8, no. 215 (P-305), 2 October 1984 ; & JP-A-59 100 413
- PATENT ABSTRACTS OF JAPAN, vol. 15, no. 164 (M-1106), 24 April 1991 ; & JP-A-3 032 484

## Description

This invention relates to a lens system for optical reader, and more particularly to, a lens system for bar code reader in which focal point is variable.

One of conventional bar code reader is described in the report "BAR CODE READER" on pages 120 to 124 in a journal "O plus E" published June, 1990 by Hiroyuki Miyazaki. In this journal, the bar code reader includes a lens system for supplying laser beam to a bar code. The lens system includes a first lens fixed on the side of an object point and a second lens which is slidable along an optical axis on the side of an image point. The second lens slides with a predetermined stroke to shift a focal point in accordance with a distance to the bar code, so that a depth of reading the bar code can be expanded.

In the lens system, when the laser beam is supplied on the bar code, a reflection light modulated by black and white stripes of the bar code is detected, so that the bar code is read.

According to the conventional lens system, a shift amount of the image point is equal to a product between a moving amount of the object point on the second lens and a longitudinal magnification of the lens system, when the object point or the second lens is moved in an optical axial direction. The longitudinal magnification is square of a transversal magnification of the lens system which is an imaging magnification, so that the image point is largely shifted by moving the object point or the second lens along an optical axis to a small extent, when the imaging magnification is set to be large.

However, the conventional lens system has disadvantages in that steps of adjusting a focal point are increased in number, and a beam diameter becomes small to pick up noise caused by print irregularity, etc. This is because beam diameters are changed on the nearest image point and the farthest image point by twice, so that a beam diameter of the object point is required to be equal to a beam diameter obtained at a time of the maximum imaging magnification. As a result, a beam diameter on an image point obtained at a time of the minimum imaging magnification is half a predetermined beam diameter, so that a focus depth becomes shallow. Although the shallow focus depth is overcome by setting a shift amount in steps of adjusting a focal point to be small, this results in the increase of the focal point adjusting steps.

Otherwise, a zoom lens in which an image point can be moved without change of a beam diameter at the image point is described on pages 270 to 272 in a journal "KOGAKU" of Hiroshi Kubota published by Iwanami Book Store. According to the zoom lens, however, there is a disadvantage in that three lenses are required to be moved, respectively, so that a structure of the system becomes complicated and expensive.

EP-A-0 276 589 discloses bar code symbol readers with variable spot size and working distance of a laser Beam scanned across symbols to be read.

Accordingly, it is an object of the invention to provide a lens system for optical reader in which a focal point can be moved without change of beam diameter at the focal point. and which can be fabricated simply and at low cost. These objects are solved with the features of the claims

The invention will be explained in more detail in conjunction with appended drawings; wherein:
Figs. 1A and 1B are schematic structural illustrations showing a conventional lens system for bar code reader, respectively;
Figs. 2A and 2B are schematic structural illustrations showing a lens system for bar code reader of a first preferred embodiment according to the invention, respectively; and
Figs. 3A and 3B are schematic structural illustrations showing a lens system for bar code reader of a second preferred embodiment according to the invention, respectively.

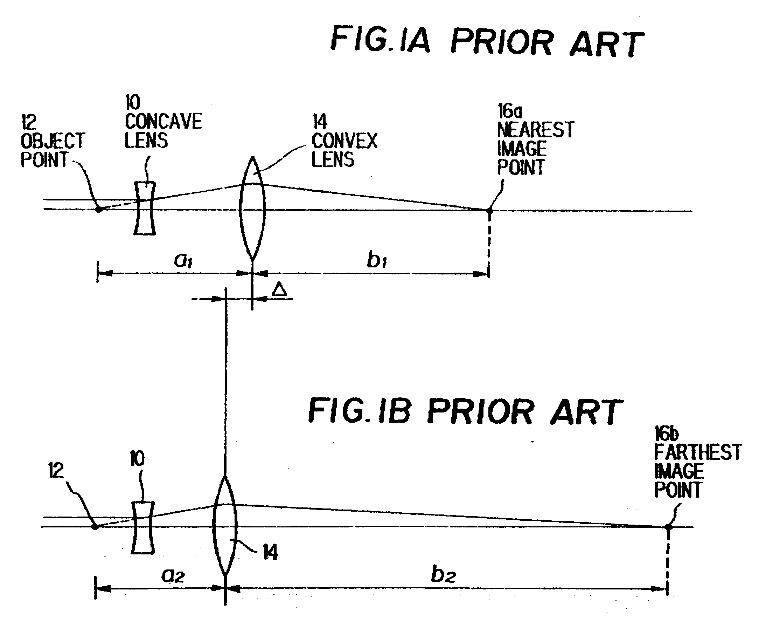

Before describing a lens system for bar code reader according to the invention, the briefly aforementioned conventional lens system will be explained in conjunction with Figs. 1A and 1B.

Figs. 1A and 1B show the conventional lens system in the nearest focus mode and the farthest focus mode, respectively. The conventional lens system includes a concave lens 10 fixed on the side of an object point 12, and a convex lens 14 which is slidable along an optical axis on the side of an image point 16a (16b). The concave lens 10 and the convex lens 14 are positioned on the same optical axis each other. In these illustrations, each of "a₁" and a₂" indicates distance between the object point 12 and the convex lens 14, each of "b₁" and "b₂" indicates a distance between the convex lens 14 and the image point 16a (16b), and "Δ" indicates a shift amount of the convex lens 14.

In the conventional lens system, the image point is moved when the convex lens 14 is slid in a direction of the optical axis. In this case, a stroke of the image point depends on the product of the stroke of the convex lens 14 and the longitudinal magnification which is square of the transversal magnification of the system. Therefore, when an imaging magnification (b/a) is determined large, the image point can be moved with a long stroke from the nearest point 16a to the farthest point 16b by a short sliding of the convex lens 14.

Concretely, when the convex lens 14 slides with the stroke of Δ (= 1.97), the image point is move to 1000mm as shown in the Table 1.

**TABLE 1**

| IMAGE POINT | DISTANCE a(mm) | DISTANCE b(mm) | IMAGING MAGNIFICATION b/a |
|---|---|---|---|
| NEAREST 16a | a₁ = 63.83 | b₁ = 1000 | 15.67 |
| FARTHEST 16b | a₂ = 61.86 | b₂ = 2000 | 32.33 |

As shown in the Table 1, the imaging magnification b/a is different by about twice between the nearest focus mode (Fig. 1A) and the farthest focus mode (Fig. 1B).

In the conventional lens system, when a beam diameter at the object point 12 is determined to be a suitable value for the farthest focus mode (Fig. 1B) to keep the beam a predetermined diameter at the image point 16b, a beam diameter at the nearest image point 16a becomes half of that at the farthest image point 16b. As a result, a depth of focus at the nearest image point 16a becomes shallow, so that the bar code reader may detects noise on the bar code caused by print irregularity, etc.. In this situation, if the focal point adjustment is carried out with a short distance, the aforementioned disadvantage can be overcome. However, the number of steps is increased, so that operation of the lens system becomes complicated.

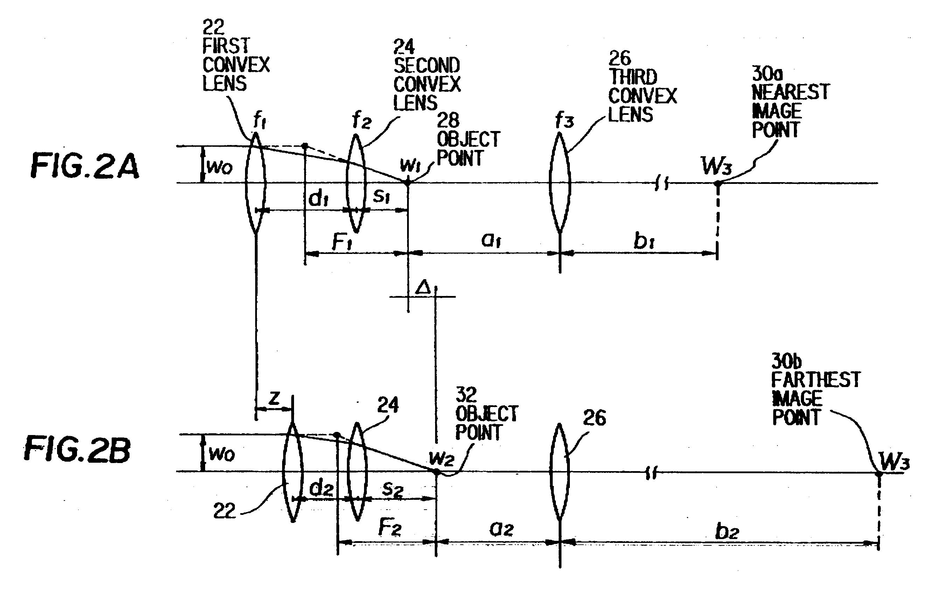

Figs. 2A and 2B shows a lens system in the nearest and the farthest focus modes, respectively, of a first preferred embodiment according to the invention. The lens system of the first preferred embodiment includes first, second and third convex lenses 22, 24 and 26 positioned on the same optical axis, respectively. The first convex lens 22 is set up to be slidable along the optical axis with a stroke "z", the second and third convex lenses 24 and 26 are positioned with an object point 28 between to be fixed. The first, second and third lenses 22, 24 and 26 can be made of combination lens.

The lens system is fabricated to meet the following equations (1) and (2) so that values of beam diameter between the nearest image point 30a and the farthest image point 30b become equal. In the equations, symbols "f₁", "f₂", and "f₃" are focal length of the first, second and third convex lenses 22, 24 and 26, respectively, "b₁" is a distance between the third convex lens 26 and the nearest image point 30a, "b₂" is a distance between the third convex lens 26 and the farthest image point 30b, "W₀" is a diameter of an incident collimated beam supplied to the first convex lens 22, "W₃" is a diameter of a converged beam at the image point 30a (30b), and "λ" is a wavelength of the laser beam, respectively.$\begin{matrix}\begin{matrix}\begin{matrix}{\text{f₁ = (π W₀W₃/ λ) [z/(b₂ - b₁)]}}^{\text{1/2}}\end{matrix} \\ \begin{matrix}{\text{f₂ = f₃ [z/(b₂ - b₁)]}}^{\text{1/2}}\end{matrix}\end{matrix}\end{matrix}$

Next, theory of the first preferred embodiment will be explained in accordance with following equations (3) and (4).

A synthesis focal length "F" of the first and second convex lenses 22 and 24 is calculated by the following equation (3). In this equation (3), "d" is a distance between the first and second convex lenses 22 and 24.$\text{1/F= 1/f₁ + 1/f₂ - d/(f₁f₂)}$

In the lens system, there is a focal relation as defined in the following equation (4). In this equation (4), "S" is a distance between the second convex lens 24 and the object point 28.$\text{1/S - 1/(f₁ - d )= 1/f₂}$

Then, when the above equations (3) and (4) are applied to the case of the first preferred embodiment, the following equations (5) to (8) can be obtained. In these equations (5) to (8), symbols suffixed "₁" indicate the case in the nearest focus mode shown in Fig. 2A and symbols suffixed "₂" indicate the case in the farthest focus mode shown in Fig. 2B.$\begin{matrix}\begin{matrix}\begin{matrix}\text{1/F₁ = 1/f₁ + 1/f₂ - d₁/(f₁f₂)}\end{matrix} \\ \begin{matrix}\text{1/F₂ = 1/f₁ + 1/f₂ - d₂/(f₁f₂)}\end{matrix} \\ \begin{matrix}\text{1/S₁ - 1/(f₁ - d₁)= 1/f₂}\end{matrix} \\ \begin{matrix}\text{1/S₂ - 1/(f₁ - d₂)= 1/f₂}\end{matrix}\end{matrix}\end{matrix}$

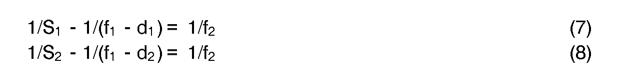

The following equations (9) and (10) can be obtained by using the synthesis focal lengths F₁ and F₂ and beam diameters W₁ and W₂ at the object points 28 and 32.$\begin{matrix}\begin{matrix}\begin{matrix}\text{F₁ λ/(π W₁) = W₀}\end{matrix} \\ \begin{matrix}\text{F₂ λ/(π W₂) = W₀}\end{matrix}\end{matrix}\end{matrix}$

The synthesis focal length F₁ and F₂ are calculated by the following equations (11) and (12).$\begin{matrix}\begin{matrix}\begin{matrix}\text{F₁ = π W₀W₁/ λ}\end{matrix} \\ \begin{matrix}\text{F₂ = π W₀W₂/ λ}\end{matrix}\end{matrix}\end{matrix}$

A distance Δ between the object points 28 and 32 and the stroke "z" of the first convex lens 22 are calculated by the following equations (13) and (14), respectively.$\begin{matrix}\begin{matrix}\begin{matrix}\text{S₂ - S₁ = Δ}\end{matrix} \\ \begin{matrix}\text{d₁ - d₂ = z}\end{matrix}\end{matrix}\end{matrix}$

Next, each of six unknown parameters f₁, f₂, d₁, d₂, S₁ and S₂ will be calculated from the equations (5), (6), (7), (8), (13) and (14). In this calculation, the ratio of the beam diameters W₁ and W₂ is determined to be "k" by the following equation (15).$\text{k = W₂/W₁ = F₂/F₁}$

First, the synthesis focal length F₁ and F₂ are eliminated by using the equations (5), (6) and (15), and the distances S₁ and S₂ are eliminated by using the equations (7), (8) and (13), so that the distances d₁ and d₂ are calculated.

That is, the distance d₁ can be calculated by the following equation (16).$\text{d₁ = (f₁ + f₂) - k (f₁ + f₂ - d₂)}$

When the distances S₁ and S₂ are eliminated by using the equations (7), (8) and (13), the following equation (17) can be obtained.$\text{f₂(f₁-d₂)/(f₁+f₂-d₂)-f₂(f₁-d₁)/(f₁+f₂-d₁) = Δ}$

The distances d₁ and d₂ are calculated by the following equations (18) and (19) by using the equations (16) and (17).$\begin{matrix}\begin{matrix}\begin{matrix}\text{d₁ = (f₁ + f₂) - (1 - k) f₂²/Δ}\end{matrix} \\ \begin{matrix}\text{d₂ = (f₁ + f₂) - (1 - k) f₂²/Δ k}\end{matrix}\end{matrix}\end{matrix}$

The focal length f₂ is calculated as the following equation (20) by using the equations (12), (18) and (19). In this equation (20), the focal length f₂ of negative value indicates one for a concave lens.${\text{f₂ = ±[Δ kz]}}^{\text{1/2}} \text{/(1 - k)}$

The focal length f₁ is calculated by the following equation (21) by using the equations (5), (6) and (14).$\text{f₁ = F₂z/[f₂ (1 - k)]}$

The distance d₁ and d₂ can be calculated by substituting the focal length f₁ and f₂ for the equations (18) and (19), so that the distance S₁ and S₂ are calculated by the following equations (22) and (23) by using the equations (7) and (8), respectively.$\begin{matrix}\begin{matrix}\begin{matrix}\text{S₁ = f₂ (f₁ - d₁) / (f₁ + f₂ - d₁)}\end{matrix} \\ \begin{matrix}\text{S₂ = f₂ (f₁ - d₂) / (f₁ + f₂ - d₂)}\end{matrix}\end{matrix}\end{matrix}$

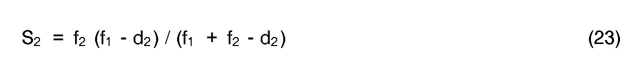

According to the equations (18) to (23), the lens system of the first preferred embodiment can be designed.

Next, relations among f₁, f₂, d₁, d₂, S₁ and S₂ will be explained in conjunction with following equations (24) to (39).

In this embodiment, two values of beam diameter on the image points are determined as the same value between the nearest focus mode and the farthest focus mode. Therefore, the lens system is required to meet the following equation (24).$\text{W₁b₁/a₁ = W₂b₂/a₂}$
(W₁b₁/a₁ = W₃, W₂b₂/a₂ = W₃)

When the equation (24) is substituted for the equation (15), the following equation (25) is obtained.$\text{k= a₂b₁/(a₁b₂)}$

The distances a₁ and a₂ can be indicated by the following equations (26) and (27) in accordance with focal relation of the third lens 26.$\begin{matrix}\begin{matrix}\begin{matrix}\text{a₁ = b₁f₃/(b₁ - f₃)}\end{matrix} \\ \begin{matrix}\text{a₂ = b₂f₃/(b₂ - f₃)}\end{matrix}\end{matrix}\end{matrix}$

When the equations (26) and (27) are substituted for the equation (25), the following equations (28) and (29) are obtained.$\begin{matrix}\begin{matrix}\begin{matrix}\text{k = (b₁ - f₃)/(b₂ - f₃)}\end{matrix} \\ \begin{matrix}\text{1 - k = (b₂ - b₁)/(b₂ - f₃)}\end{matrix}\end{matrix}\end{matrix}$

The distances a₁ and a₂ can be calculated by the following equation (30) in accordance with Figs. 2A and 2B.$\text{Δ = a₁ - a₂}$

When the equations (26) and (27) are substituted for the equation (30), the following equation (31) is obtained.$\text{Δ = f₃² (b₂ - b₁)/[(b₁ - f₃) (b₂ - f₃)]}$

When the equations (28), (29) and (31) are substituted for the equation (20), the following equation (32) is obtained.${\text{f₂ = f₃ [z/(b₂ - b₁)]}}^{\text{1/2}}$

The equation (32) indicates that the focal length f₂ is proportional to the focal length f₃.

Next, the focal length f₁ of the first lens 22 will be calculated. The beam diameter W₂ at the object point 32 in the farthest focus mode is calculated by the following equation (33).$\text{W₂ = W₃a₂/b₂}$

When the equation (33) is substituted for the equation (12), the following equation (34) is obtained.$\text{F₂ = π W₀W₃a₂/(λ b₂)}$

When the equations (29), (32) and (34) are substituted for the equation (21), the focal length f₁ is calculated by following equation (35).${\text{f₁ = (π W₀W₃/ λ) [z/(b₂ - b₁)]}}^{\text{1/2}}$

The equation (35) indicates that the focal length f₁ of the first lens 22 does not depend on the focal length f₂ and f₃ of the second and third lenses 24 and 26, and is proportional to the diameter W₀ of the incident collimated beam and to the beam diameter W₃ at the image point.

When the equation (23) is substituted for the equation (35), a relation among the focal lengths of the first, second and third lenses 22, 24 and 26 can be obtained by the following equations (36) and (37).$\begin{matrix}\begin{matrix}\begin{matrix}\text{(f₁/W₀)/(f₂/f₃) = π W₃/ λ}\end{matrix} \\ \begin{matrix}\text{f₁f₃/f₂ = π W₀W₃/ λ}\end{matrix}\end{matrix}\end{matrix}$

Next, a relation of positions between the second and third lenses 24 and 26 will be studied. When the equations (22) and (24) are substituted for the equation "S₁ + a₁", the distance between the second and third lenses 24 and 26 can be obtained by the following equation (38).$\text{S₁ + a₁ = f₂(f₁-d₁)/(f₁+f₂-d₁) + b₁f₃/(b₁-f₃)}$

The following equation (39) can be obtained in accordance with the equations (18), (29) and (31). The equation (39) indicates that a telescope structure (a reverse telescope structure) is composed of the second lens 24 and the third lens 26.$\text{S₁ + a₁ = f₂ + f₃}$

Next, a concrete case will be explained in accordance with the aforementioned theory. According to the first preferred embodiment, it is necessary that the lens system meets one of the following conditions (40) and (41) in order that the beam diameter W₃ at the nearest and farthest image points 30a and 30b are equal.$\begin{matrix}\begin{matrix}\begin{matrix}\text{Δ > 0, k < 1}\end{matrix} \\ \begin{matrix}\text{Δ < 0, k > 1}\end{matrix}\end{matrix}\end{matrix}$

According to the Table 1 shown for the conventional lens system, the distance "Δ" and "k" are calculated by following equations ① or ② by using the equation (24), respectively. The equations ① and ② indicate the same meaning.

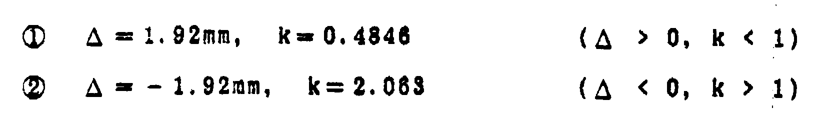

For instance, when the beam diameter W₃ at the image point is 100 »m, the beam diameter W₁ is calculated to be 6.382 »m and the beam diameter W₂ is calculated to be 3.093 »m on condition of the Table 1. In addition, when the wavelength "λ = 0.67 »m" and the incident beam diameter "W₀ = 1mm", the synthesis focal length F₂ is calculated as 14.503mm. Further, when the distance z= 5mm, the focal length f₁ and f₂, the distance d₁, d₂, S₁ and S₂ are calculated as follows, respectively.$\begin{matrix}\begin{matrix}\text{f₁ = 33.62mm, f₂ = 4.185mm} \\ \text{d₁ = 33.10mm, d₂ = 28.10mm} \\ \text{S₁ = 0.4594mm, S₂ = 2.380mm}\end{matrix}\end{matrix}$

As explained above, when the first lens 22 is moved by 5mm, the object point is moved from W₁ to W₂ by 1.92mm (S₁ - S₂). When a distance between the second convex lens 24 and the third convex lens 26 meet to the equation " $\text{S₁ + a₁ = S₂ + a₂ = 64.2mm}$ ", the same imaging magnification (b/a) as the Table 1 is obtained.

A Table 2 shows change of the focal points "a" and "b" and diameter "W₃" at the image point in relation to a position of the first lens 22.

**TABLE 2**

| DISTANCE d (mm) | a (mm) | b (mm) | DIAMETER OF BEAM W₃ (»m) |
|---|---|---|---|
| 33 | 63.70 | 1032.8 | 101.3 |
| 32 | 63.07 | 1231.7 | 101.0 |
| 31 | 62.63 | 1429.3 | 100.7 |
| 30 | 62.30 | 1625.8 | 100.3 |
| 29 | 62.04 | 1821.2 | 100.0 |
| 28 | 61.84 | 2015.7 | 99.7 |

In this embodiment, if the focal lengths of the first, second and third lenses 22, 24 and 26 are determined f₁ = 33.16mm, f₂ = 7.07mm and f₃ = 100mm, respectively, the focal length of the second lens 24 becomes longer than the above case.

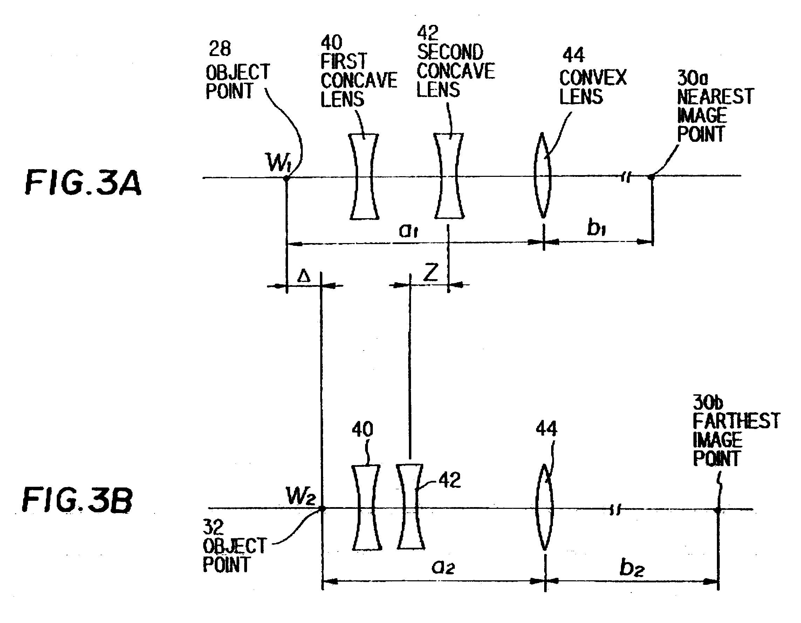

Figs. 3A and 3B shows a lens system in the nearest and farthest focus modes, respectively, of a second preferred embodiment according to the invention. The lens system includes first and second concave lenses 40 and 42 and a convex lens 44. In the second preferred embodiment, the first concave lens 40 corresponds to the second convex lens 24 of the first preferred embodiment, the second concave lens 42 corresponds to the first convex lens 22 of the first preferred embodiment and the convex lens 44 corresponds to the third convex lens 26 of the first preferred embodiment, respectively.

In more detail, in the equation (20), when a sign of the symbol "f₂" is negative, a sign of the symbol "f₁" also becomes negative from the equation (21) and a sign of the symbol "f₃" becomes positive from the equation (32). As the result, signs of the distances "d1" and "d2" become negative, that is the first lens and the second lens are positioned on the opposite sides each other in relation to a case of the first preferred embodiment. Therefore, theory of the first preferred embodiment can be used for the second preferred embodiment. According to the second preferred embodiment, the lens system can be fabricated shorter than that of the first preferred embodiment.

As described above, according to the first and second preferred embodiments, diameter of the laser beam at the image point can be fixed to be a suitable value by determining diameter at the image point to be equal between the nearest and farthest focus modes.

## Claims

1. A lens system for an optical reader, comprising:
first, second and third convex lenses (22; 24; 26) arranged in order to have a common optical axis, said first convex lens (22) being movable along said common optical axis, and said second and third convex lenses (24; 26) providing a reverse telescope structure, whereby the image point formed by said third convex lens (26) is moved along said common optical axis between a nearest position (30a) and a farthest position (30b) by movement of said first convex lens (22), and the same spot diameter is realized at said nearest and farthest image points (30a; 30b);
wherein when a beam of diameter W₀ and of wavelength λ is incident on said first convex lens (22), the diameter of the spot is W₃ at the nearest and farthest image points (30a; 30b) and said first to third convex lenses (22; 24; 26) meet the equations defined below,$\begin{matrix}\begin{matrix}{\text{f₁ = (πW₀W₃/λ) [z/(b₂-b₁)]}}^{\text{1/2}} \text{; and} \\ {\text{f₂ = f₃[z/(b₂-b₁)]}}^{\text{1/2}}\end{matrix}\end{matrix}$ where f₁ is the focal length of said first convex lens (22), f₂ is the focal length of said second convex lens (24), f₃ is the focal length of said third convex lens (26), z is the moving amount of said first convex lens (22), b₁ is the distance between said third convex lens (26) and said image point (30a) formed at the nearest position from said third convex lens (26), and b₂ is the distance between said third convex lens (26) and said image point formed at the farthest position from said third convex lens (26).

2. A lens system for an optical reader, comprising:
first and second concave lenses (40; 42) and a convex lens (44) arranged in order to have a common optical axis, said second concave lens (42) being movable along said common optical axis, and said first concave lens (40) and said convex lens (44) providing a reverse telescope structure, whereby an image point formed by said convex lens (44) is moved along said common optical axis between a nearest position (30a) and a farthest position (30b) by movement of said second concave lens (42), and the same spot diameter is realized at said nearest and farthest image points (30a; 30b);
wherein when a beam of diameter W₀ and of wave-length λ is incident on said first concave lens (40), the diameter of the spot is W₃ at the nearest and farthest image points (30a; 30b) and said first and second concave lenses (40; 42) and convex lens (44) meet the equations defined below,$\begin{matrix}\begin{matrix}{\text{f₁ =-(πW₀W₃/λ) [z/(b₂-b₁)]}}^{\text{1/2}} \text{; and} \\ {\text{f₂ =-f₃[z/(b₂-b₁)]}}^{\text{1/2}}\end{matrix}\end{matrix}$ where f₁ is the focal length of said second concave lens (42), f₂ is the focal length of said first concave lens (40), f₃ is the focal length of said convex lens (44), z is the moving amount of said second concave lens (42), b₁ is the distance between said convex lens (44) and said image point (30a) formed at the nearest position from said convex lens (44), and b₂ is the distance between said convex lens (44) and said image point (30b) formed at the farthest position from said convex lens (44).

## Patentansprüche

1. Linsensystem für ein optisches Lesegerät mit
einer ersten, zweiten und dritten konvexen Linse (22; 24; 26), die so angeordnet sind, daß sie eine gemeinsame optische Achse besitzen, wobei die erste konvexe Linse (22) entlang der gemeinsamen optischen Achse bewegbar ist und die zweite und dritte konvexe Linse (24; 26) eine umgekehrte Teleskopanordnung bilden, wobei der durch die dritte konvexe Linse (26) gebildete Bildpunkt entlang der gemeinsamen optischen Achse zwischen einer nächstliegenden Position (30a) und einer entferntesten Position (30b) durch eine Bewegung der ersten konvexen Linse (22) bewegt wird, und an dem nächstliegenden und entferntesten Bildpunkt (30a; 30b) der gleiche Lichtfleckdurchmesser verwirklicht ist;
wobei, wenn ein Strahl mit Durchmesser W₀ und Wellenlänge λ auf die erste konvexe Linse (22) einfällt, der Durchmesser des Lichtflecks an dem nächstliegenden und entferntesten Bildpunkt (30a; 30b) W₃ ist, und die erste bis dritte konvexe Linse (22; 24; 26) die nachstehend bestimmten Gleichungen erfüllen,$\begin{matrix}\begin{matrix}{\text{f₁ = (π W₀ W₃/λ) [z/(b₂ - b₁)]}}^{\text{1/2}} \text{; und} \\ {\text{f₂ = f₃ [z/(b₂ - b₁)]}}^{\text{1/2}}\end{matrix}\end{matrix}$ in denen f₁ die Brennweite der ersten konvexen Linse (22) ist, f₂ die Brennweite der zweiten konvexen Linse (24) ist, f₃ die Brennweite der dritten konvexen Linse (26) ist, z der Verstellweg der ersten konvexen Linse (22) ist, b₁ der Abstand zwischen der dritten konvexen Linse (26) und dem von der dritten konvexen Linse (26) in der nächstliegenden Position gebildeten Bildpunkt (30a) ist und b₂ der Abstand zwischen der dritten konvexen Linse (26) und dem von der dritten konvexen Linse (26) in der entferntesten Position gebildeten Bildpunkt ist.

2. Linsensystem für ein optisches Lesegerät mit
einer ersten und zweiten Konkavlinse (40; 42) und einer konvexen Linse (44), die so angeordnet sind, daß sie eine gemeinsame optische Achse besitzen, wobei die zweite Konkavlinse (42) entlang der gemeinsamen optischen Achse bewegbar ist und die erste Konkavlinse (40) und die konvexe Linse (44) eine umgekehrte Teleskopanordnung bilden, wobei ein durch die konvexe Linse (44) gebildeter Bildpunkt entlang der gemeinsamen optischen Achse zwischen einer nächstliegenden Position (30a) und einer entferntesten Position (30b) durch eine Bewegung der zweiten Konkavlinse (42) bewegt wird, und an dem nächstliegenden und entferntesten Bildpunkt (30a; 30b) der gleiche Lichtfleckdurchmesser verwirklicht ist;
wobei, wenn ein Strahl mit Durchmesser W₀ und Wellenlänge λ auf die erste Konkavlinse (40) einfällt, der Durchmesser des Lichtflecks an dem nächstliegenden und entferntesten Bildpunkt (30a; 30b) W₃ ist, und die erste und zweite Konkavlinse (40; 42) und die konvexe Linse (44) die nachstehend bestimmten Gleichungen erfüllen,$\begin{matrix}\begin{matrix}{\text{f₁ = -(π W₀ W₃/λ) [z/(b₂ - b₁)]}}^{\text{1/2}} \text{; und} \\ {\text{f₂ = -f₃ [z/(b₂ - b₁)]}}^{\text{1/2}}\end{matrix}\end{matrix}$ in denen f₁ die Brennweite der zweiten Konkavlinse (42) ist, f₂ die Brennweite der ersten Konkavlinse (40) ist, f₃ die Brennweite der konvexen Linse (44) ist, z der Verstellweg der zweiten Konkavlinse (42) ist, b₁ der Abstand zwischen der konvexen Linse (44) und dem von der konvexen Linse (44) in der nächstliegenden Position gebildeten Bildpunkt (30a) ist und b₂ der Abstand zwischen der konvexen Linse (44) und dem von der konvexen Linse (44) in der entferntesten Position gebildeten Bildpunkt (30b) ist.

## Revendications

1. Système de lentilles pour un lecteur optique, comprenant :
des première, seconde et troisième lentilles convexes (22 ; 24 ; 26) disposées de façon à avoir un axe optique commun, ladite première lentille convexe (22) étant mobile le long dudit axe optique commun, et lesdites seconde et troisième lentilles convexes (24 ; 26) réalisant une structure de télescope inverse, si bien que le point image formé par ladite troisième lentille convexe (26) est déplacé le long dudit axe optique commun, entre une position la plus proche (30a) et une position la plus éloignée (30b), par le mouvement de ladite première lentille convexe (22), et le même diamètre de point lumineux est obtenu auxdits plus proche et plus éloigné points image (30a ; 30b) ;
dans lequel lorsqu'un faisceau d'un diamètre W₀ et d'une longueur d'onde λ est incident sur ladite première lentille convexe(22), le diamètre du point lumineux est W₃ aux plus proche et plus éloigné points image (30a ; 30b) et lesdites première à troisième lentilles convexes (22 ; 24 ; 26) satisfont aux équations définies ci-dessous,$\begin{matrix}\begin{matrix}{\text{f₁ = (πW₀W₃/λ) [z/(b₂-b₁)]}}^{\text{1/2}} \text{; et} \\ {\text{f₂ = f₃[z/(b₂-b₁)]}}^{\text{1/2}}\end{matrix}\end{matrix}$ dans lesquelles f₁ est la longueur locale de ladite première lentille convexe (22), f₂ est la longueur focale de ladite seconde lentille convexe (24), f₃ est la longueur locale de ladite troisième lentille convexe (26), z est la quantité de déplacement de ladite première lentille convexe (22), b₁ est la distance entre ladite troisième lentille convexe (26) et ledit point image (30a) formé en la position la plus proche à partir de ladite troisième lentille convexe (26), et b₂ est la distance entre ladite troisième lentille convexe (26) et ledit point image formé en la position la plus éloignée à partir de ladite troisième lentille convexe (26).

2. Système de lentilles pour un lecteur optique, comprenant :
des première et seconde lentilles concaves (40, 42) et une lentille convexe (44) disposées de façon à avoir un axe optique commun, ladite seconde lentille concave (42) étant mobile le long dudit axe optique commun, et ladite première lentille concave (40) et ladite lentille convexe (44) réalisant une structure de télescope inverse, si bien que le point image formé par ladite lentille convexe (44) est déplacé le long dudit axe optique commun entre une position la plus proche (30a) et une position la plus éloignée (30b) par le mouvement de ladite seconde lentille concave (42) et le même diamètre de point lumineux est obtenu auxdits plus proche et plus éloigné points image (30a ; 30b) ;
dans lequel lorsqu'un faisceau de diamètre W₀ et de longueur d'onde λ est incident sur ladite première lentille concave (40), le diamètre du point lumineux est W₃ auxdits plus proche et plus éloigné points image (30a; 30b) et lesdites première et seconde lentilles concaves (40 ; 42) et ladite lentille convexe (44) satisfont aux équations définies ci-dessous :$\begin{matrix}\begin{matrix}{\text{f₁ = - (πW₀W₃/λ) [z/(b₂-b₁)]}}^{\text{1/2}} \text{; et} \\ {\text{f₂ = - f₃[z/(b₂-b₁)]}}^{\text{1/2}}\end{matrix}\end{matrix}$ dans lesquelles f₁ est la longueur focale de ladite seconde lentille concave (42), f₂ est la longueur focale de ladite première lentille concave (40), f₃ est la longueur focale de ladite lentille convexe (44), z est la quantité de déplacement de ladite seconde lentille concave (42), b₁ est la distance entre ladite lentille convexe (44) et ledit point image (30a) formé en la position la plus proche à partir de ladite lentille convexe (44), et b₂ est la distance entre ladite lentille convexe (44) et ledit point image (30b) formé en la position la plus éloignée à partir de ladite lentille convexe (44).
